(19) Europäisches Patentamt
European Patent Office
Office européen des brevets

(11) **EP 2 540 992 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
**F01D 25/12** *(2006.01)*  **F01D 5/18** *(2006.01)*

(21) Anmeldenummer: **12173592.2**

(22) Anmeldetag: **26.06.2012**

(54) **Vorrichtung und Verfahren zur Erzeugung eines Ringwirbel ausbildenden Prallstrahls sowie Turbomaschine mit einer derartigen Vorrichtung**

Device and method for producing an impingement air jet in the form of an annular swirl and turbocharger with such a device

Dispositif et procédé de génération d'un jet de gaz formant des tourbillons annulaires ainsi qu' une turbomachine dotée d'un tel dispositif

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2011 DE 102011078138**

(43) Veröffentlichungstag der Anmeldung:
**02.01.2013 Patentblatt 2013/01**

(73) Patentinhaber: **Rolls-Royce Deutschland Ltd & Co KG**
**15827 Blankenfelde-Mahlow (DE)**

(72) Erfinder: **Dr.-Ing Janetzke, Timm**
**15827 Blankefelde-Mahlow (DE)**

(74) Vertreter: **Maikowski & Ninnemann Patentanwälte Partnerschaft mbB Postfach 15 09 20 10671 Berlin (DE)**

(56) Entgegenhaltungen:
**EP-A2- 1 959 096      US-A- 3 434 487**
**US-A- 5 190 099       US-A- 6 053 203**

**Beschreibung**

Die Erfindung betrifft eine Vorrichtung und ein Verfahren zur Erzeugung eines Ringwirbel ausbildenden Prallstrahls sowie eine Turbomaschine mit einer derartigen Vorrichtung.

Es ist allgemein bekannt, zur Kühlung von Komponenten einer Turbomaschine eine Prallkühlung zu realisieren. Entsprechende Prallkühlkonfigurationen sehen vor, eine zu kühlende Komponente oder Oberfläche mit Kühlluft zu beaufschlagen, wobei die Kühlluft oder ein anderes Fluid aus einer Düse auf eine zu kühlende Oberfläche prallt. In Turbomaschinen im Einsatz befindliche Prallkühlkonfigurationen werden mit stationären Prallstrahlen betrieben, die eine stationäre Zufuhr der Kühlluft vorsehen. EP1959096 zeigt ein Verfahren zur Prallluftkühlung für Gasturbinen gemäß dem Stand der Technik.

Aus der DE 10 2007 008 319 A1 ist es bekannt, eine Prallkühlung unter Realisierung einer pulsierenden Zufuhr der Kühlluft vorzusehen. In Janetzke: Experimentelle Untersuchungen zur Effizienzsteigerung von Prallkühlkonfigurationen durch dynamische Ringwirbel hoher Amplitude, Dissertation TU-Berlin, 2010, Mensch und Buch Verlag, wurde nachgewiesen, dass durch eine pulsierende Zufuhr der Kühlluft erhebliche Steigerungen der Kühleffektivität mit einem dementsprechenden Einsparpotential an Kühlluftmassenstrom erreicht werden kann. Dies hängt damit zusammen, dass durch eine pulsierende Kühlluftzufuhr in Abhängigkeit von der Pulsationsfrequenz und der Pulsationsamplitude Ringwirbel generiert werden, die im Kern Kühlfluid einschließen und vom Düsenaustritt an die zu kühlende Prallplatte transportieren. Dort führt das periodische Auftreten der Ringwirbel zu einer periodischen Erneuerung von Fluid- und Temperaturgrenzschicht. In Abhängigkeit von der Wirbelfrequenz und Wirbelamplitude bzw. der sich aus diesen Werten ergebenden Wirbelstärke kann dies zu Verringerungen oder Steigerungen des konvektiven Wärmeübergangs führen.

Zur Ausbildung von Ringwirbelstrukturen, die die Effektivität der Prallkühlung erheblich steigern, hat sich ein bestimmtes Verhältnis zwischen der Frequenz f der pulsierenden Kühlluftzufuhr, der mittleren Düsenausströmgeschwindigkeit u und dem Durchmesser der Austrittsöffnung, die den Prallstrahl abgibt, als vorteilhaft herausgestellt. Diese drei Parameter sind über die Strouhalzahl Sr, einer dimensionslosen Frequenz, wie folgt verknüpft:

$$Sr = f*d/u.$$

Es hat sich herausgestellt, dass eine Strouhalzahl von Sr = 0,26 die Untergrenze für eine Erhöhung des Wärmeübergangs bildet. Idealerweise liegen Strouhalzahlen im Bereich zwischen Sr = 0,8 bis 1,2, damit sich Ringwirbelstrukturen mit hoher Kühleffizienz ausbilden können.

Es ergibt sich somit, dass eine pulsierende Kühlluftzufuhr unter Generierung von Ringwirbeln eine erheblich verbesserte Effizienz einer Prallkühlung ermöglicht. Dabei stellt sich allerdings das Problem, wie bei Turbomaschinen wie z. B. thermisch hochbelasteten Turbinenbauteilen eines Strahltriebwerks eine Pulsierung der Kühlluft bei den zur Realisierung effektiver Strouhalzahlen erforderlichen hohen Amplituden und hohen Frequenzen bereitgestellt werden kann.

Bisher sind pulsierende Prallkühlkonfigurationen lediglich im Laborversuch erprobt worden. In Laborversuchen wird die Pulsation üblicherweise durch aktive Aktuatoren, wie z. B. Ventile oder sirenenähnliche Bauteile erzeugt. Des Weiteren werden zur Erzeugung der notwendigen hohen Amplituden teilweise zusätzliche Resonatoren eingesetzt. Die im Laborversuch verwendeten aktiven Pulsgeneratoren erreichen zwar die notwendige hohe Amplitude und Frequenz, sind aber aufgrund ihrer Baugröße, ihres zusätzlichen Gewichtes und ihrer Komplexität für den Einsatz in einer Turbomaschine wenig geeignet. In technischer Sicht problematisch ist dabei vor allem die Kombination aus der benötigten hohen Frequenz, die sich aus den hohen Ausströmgeschwindigkeiten der in der Turbomaschine verwendeten Prallstrahldüsen zum Erreichen der genannten Strouhalzahlen ergibt, und der zwingend notwendigen hohen Amplitude.

Weiter hat sich gezeigt, dass passive Methoden zur Pulsationserzeugung, die beispielsweise Karmanwirbel-Düsen verwenden, nicht dazu geeignet sind, ausreichend hohe Amplituden im angestrebten Strouhalzahlbereich zu generieren und damit den konvektiven Wärmeübergang zu steigern, vgl. hierzu Herwig at al., 2004, Wärmeübergang bei instationären Prallstrahlen, Chemie Ingenieur Technik, 76(2), 84 - 88.

Die US 5 190 099 A zeigt ein fluidisches Element mit fluidischen Rückkopplungen.

Der vorliegenden Erfindung liegt somit die Aufgabe zugrunde, eine Vorrichtung bereitzustellen, die es ermöglicht, pulsierende Prallstrahlen im Strouhalzahlbereich zwischen Sr = 0,2 und 2 und mit hoher Amplitude bereitzustellen, wobei die Vorrichtung dazu geeignet sein soll, in Turbomaschinen zur Prallkühlung eingesetzt zu werden.

Die vorliegende Erfindung stellt eine Vorrichtung mit den Merkmalen des Anspruchs 1, eine Turbomaschine mit den Merkmalen des Anspruchs 9 und ein Verfahren mit den Merkmalen des Anspruchs 12 zur Verfügung. Ausgestaltungen der Erfindung sind in den Unteransprüchen angegeben.

Danach ist gemäß einem ersten Erfindungsaspekt vorgesehen, zur Erzeugung eines Prallstrahls, der Ringwirbel ausbildet, mindestens ein fluidisches Schaltelement vorzusehen, das einen Eingangszweig und zu diesem stromabwärts gelegen mindestens zwei Ausgangszweige aufweist. Es sind äußere Steuermittel vorgesehen, die das im Eingangszweig strömende Kühlgas an einer Verzweigung derart steuern, dass das Kühlgas in jeweils nur einen der Ausgangszweige geleitet wird. Dabei wird das Kühlgas abwechselnd in den einen oder den anderen der Ausgangszweige geleitet. In jedem Ausgangszweig wird auf diese Weise ein mit einer Frequenz f pulsierenden Prallstrahl erzeugt. Das fluidische Schaltelement ist dabei derart ausgebildet, dass Kühlgas an den Ausgangsöffnungen der Ausgangszweige mit einer mittleren Ausströmgeschwindigkeit und mit einer Frequenz abgegeben werden kann, dass der aus den Ausgangsöffnungen austretende Prallstrahl Ringwirbel ausbildet.

Die erfindungsgemäße Lösung ermöglicht es, durch den Einsatz eines fluidischen Schaltelementes Ringwirbel mit einer hohen Amplitude bei einer definierten Strouhalzahl im Bereich zwischen 0,2 und 2,0 in einem für Turbomaschinen charakteristischen Frequenzbereich zu erzeugen, ohne dass der eingehende Hauptmassenstrom des Kühlgases hierzu periodisch unterbrochen werden müsste.

Dabei wird durch das alternierende Leiten des Kühlgases in die beiden Ausgangszweige des fluidischen Schaltelementes im Idealfall eine Amplitude von 100 % der mittleren Ausströmgeschwindigkeit bereitgestellt, was einem On/Off-Strahl entspricht. Die am Ausgang des fluidischen Schaltelementes bereitgestellten Prallstrahlen werden somit periodisch unterbrochen. Dies erfolgt erfindungsgemäß ohne einen aktiven, aufwändigen Unterbrechungsmechanismus.

Die äußeren Steuermittel umfassen mindestens einen periodisch schwankenden Steuermassenstrom, der mittels einer Steuerzuleitung oder zwei Steuerzuleitungen dem fluidischen Schaltelement im Bereich der Verzweigung zugeführt wird. Der Steuermassenstrom ist dabei kleiner als der Massenstrom des Kühlgases. Die Steuerung entspricht insofern der Steuerung eines Transistors. Derartige Steuerungen sind in ihrer Funktionsweise in Kirshner, 1966, Fluid Amplifiers, McGraw-Hill, S. 193-203 beschrieben.

Dabei kann sowohl eine beidseitige Steuerung vorgesehen sein, bei der der Steuermassenstrom über zwei Steuerzuleitungen dem fluidischen Schaltelement im Bereich der Verzweigung zugeführt wird, als auch eine einseitige Steuerung, bei der der Steuermassenstrom über eine Steuerzuleitung dem fluidischen Schaltelement im Bereich der Verzweigung zugeführt wird. Bei einer beidseitigen Steuerung ist das fluidische Steuerelement in der Regel derart ausgebildet, dass sich die Kühlgasströmung ohne den Steuermassenstrom auf die beiden Ausgangszweige aufteilt. Der mit einer bestimmten Steuerfrequenz beaufschlagte Steuermassenstrom führt dazu, dass die Kühlgasströmung abwechselnd in jeweils einen der beiden Ausgangszweige geleitet wird. Bei einer einseitigen Steuerung ist das fluidische Steuerelement derart ausgebildet, dass die Kühlgasströmung ohne den Steuermassenstrom in einen der beiden Ausgangszweige geleitet wird und insofern eine monostabile Situation vorliegt. Der mit einer bestimmten Steuerfrequenz beaufschlagte Steuermassenstrom führt dazu, dass die Kühlgasströmung für eine bestimmte Zeit - entsprechend der Steuerfrequenz - auf den anderen der beiden Ausgangszweige umgelenkt wird.

Ein fluidisches Schaltelement, das ohne eine äußere Steuerung auskommt, ist beispielsweise so ausgelegt, dass es aufgrund seiner Geometrie, eventuell in Verbindung mit internen Rückkopplungskanälen zwischen Austrittskanälen und Steuerkanälen, bei einer charakteristischen Frequenz schwingt.

Es ist vorgesehen, dass das Verhältnis zwischen der Frequenz f des pulsierenden Prallstrahls, der mittleren Ausströmgeschwindigkeit u des Kühlgases aus den Ausgangsöffnungen, und dem Durchmesser d der Ausgangsöffnungen derart ist, dass die durch diese Werte nach der Formel $Sr = f*d/u$ gebildete Strouhalzahl Sr im Bereich zwischen 0,2 und 2,0, insbesondere im Bereich zwischen 0,6 und 1,4 und dabei vorzugsweise im Bereich zwischen 0,8 und 1,2 liegt.

Es kann vorgesehen sein, dass das fluidische Schaltelement in einer Trennwand ausgebildet ist, die beabstandet zu einer zu kühlenden Prallwand angeordnet ist, wobei die vom Prallstrahl ausgebildeten Ringwirbel auf die Prallwand prallen und diese mit hoher Effizienz kühlen. Die Prallwand ist dabei auf der einen Seite der Trennwand angeordnet. Von der anderen Seite der Trennwand wird dem fluidischen Schaltelement Kühlgas zugeführt, beispielsweise über ein mit Kühlgas gefülltes Volumen.

Das fluidische Schaltelement kann in seiner konkreten Ausgestaltung eine Vielzahl von Variationen aufweisen. Beispielsweise kann vorgesehen sein, dass die Ausgangszweige des fluidischen Schaltelements gebogen oder gerade ausgebildet sind. Auch kann Bereich der Verzweigung, an dem der Eingangszweig sich in mindestens zwei Ausgangszweige aufteilt, vielfältige Ausgestaltungen aufweisen. In einer Ausführungsvariante ist hierzu vorgesehen, dass die Verzweigung des fluidischen Schaltelements zwei Rückkopplungs-Ausbuchtungen ausbildet, in denen ein Teil des Kühlgases, statt in einen der Ausgangszweige zu strömen, in Richtung des Eingangszweigs zurückgeführt wird. Hierdurch wird ein Schalten des Schaltelements in den jeweils anderen Zustand erleichtert und beschleunigt, so dass höhere Schaltfrequenzen realisiert werden können.

In einer weiteren Ausgestaltung der Erfindung ist vorgesehen, dass die Vorrichtung eine Mehrzahl von fluidischen Schaltelementen aufweist, die in Form eines ein- oder zweidimensionalen Arrays angeordnet sind. Dabei kann in einer Ausführungsvariante vorgesehen sein, dass zwei fluidische Schaltelemente derart nebeneinander angeordnet und zwei Ausgangszweige dieser nebeneinander angeordneten fluidischen Schaltelemente derart zueinander ausgerichtet sind, dass in einem definierten Abstand zu den fluidischen Schaltelementen Ringwirbel mit einer doppelten Frequenz vorliegen. In dem definierten Abstand ist die Prallwand angeordnet, so dass auf einen betroffenen Wandbereich Ringwirbel aus zwei Ausgangszweigen zweier Schaltelemente treffen, so dass dieser Wandbereich mit doppelter Frequenz mit Ringwirbeln beaufschlagt wird, mit dem Vorteil einer weiter verbesserten Kühlung.

Gemäß einem zweiten Erfindungsaspekt betrifft die Erfindung eine Turbomaschine mit einer Vorrichtung gemäß Anspruch 1. Dabei ist das fluidische Schaltelement derart in der Turbomaschine angeordnet, dass die Ringwirbel, die der aus den Ausgangsöffnungen des fluidischen Schaltelements austretende Prallstrahl ausbildet, auf eine zu kühlende Wand oder Oberfläche der Turbomaschine treffen.

Bei der Turbomaschinenkomponente handelt es sich beispielsweise um eine Turbine. Die zu kühlende Wand oder Oberfläche ist die eines Gehäuses, einer Gehäuseverkleidung oder einer Turbinenschaufel der Turbine. In einer Ausführungsvariante ist die zu kühlende Oberfläche beispielsweise die rückseitige Oberfläche eines Einlegerings (auch als "Liner" bezeichnet), der im Bereich des Rotors einer Turbine am Umfang des Turbinengehäuses angeordnet ist. Die erfindungsgemäße Vorrichtung kann jedoch ebenso zur Kühlung beliebiger anderer Strukturen einer Turbomaschine eingesetzt werden, die eine Prallwand aufweisen.

In einem dritten Erfindungsaspekt betrifft die Erfindung ein Verfahren zur Erzeugung eines Ringwirbel ausbildenden Prallstrahls. Es ist vorgesehen, dass Kühlgas mittels äußeren Steuermitteln in einem fluidischen Schaltelement abwechselnd mindestens zwei Ausgangszweigen des fluidischen Schaltelements zugeführt wird, wobei in jedem Ausgangszweig ein mit einer Frequenz f pulsierenden Prallstrahl erzeugt wird, der nach Verlassen des fluidischen Schaltelements Ringwirbel ausbildet, wobei die äußeren Steuermittel mindestens einen periodisch schwankenden Steuermassenstrom umfassen und eine einseitige oder beidseitige Steuerung bereitstellen, wobei der eine Steuermassenstrom oder die zwei Steuermassenströme über eine oder zwei Steuerzuleitungen dem fluidischen Schaltelement zugeführt werden.

Die Erfindung wird nachfolgend unter Bezugnahme auf die Figuren der Zeichnung anhand mehrerer Ausführungsbeispiele näher erläutert. Es zeigen:

Figur 1 in schematischer Darstellung ein fluidisches Schaltelement zur Erzeugung eines Prallstrahls, der Ringwirbel ausbildet;

Figur 2 in schematischer Darstellung ein Ausführungsbeispiel einer Prallkühlkonfiguration unter Verwendung einer Mehrzahl fluidischer Schaltelemente;

Figur 3 in schematischer Darstellung ein weiteres Ausführungsbeispiel einer Prallkühlkonfiguration unter Verwendung einer Mehrzahl fluidischer Schaltelemente, wobei eine Verdopplung der Aufprallfrequenz von Ringwirbeln zwischen benachbarten Schaltelementen realisierbar ist;

Figur 4 in schematischer Darstellung ein weiteres Ausführungsbeispiel einer Prallkühlkonfiguration mit einer Mehrzahl fluidischer Schaltelemente, wobei die Schaltelemente zur Realisierung hoher Schaltfrequenzen ausgebildet sind; und

Figur 5 eine Teilansicht einer Turbine eines Strahltriebwerks, wobei ein Gehäuse der Turbine mit einer Prallkühlkonfiguration entsprechend den Figuren 2 bis 4 gekühlt wird.

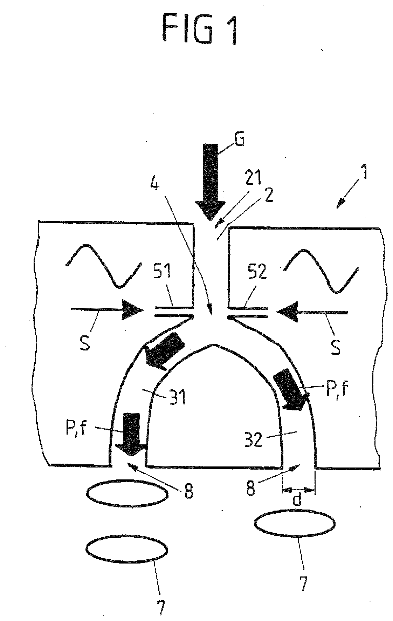

Die Figur 1 zeigt ein fluidisches Schaltelement 1, das der Erzeugung eines Prallstrahls dient, der Ringwirbel ausbildet. Das Schaltelement 1 weist einen Eingangszweig 2 auf, der sich an einer stromabwärts gelegenen Verzweigung 4 in zwei Ausgangszweige 31, 32 aufteilt. Der Eingangszweig 2 wird an einer Eingangsöffnung 21 mit einem Kühlgas G beaufschlagt, bei dem es sich beispielsweise um Luft handelt. Zum Beaufschlagen des Eingangszweigs 2 mit einem Kühlgas ist beispielsweise vorgesehen, dass sich oberhalb des fluidischen Schaltelementes 1 ein Volumen befindet, in dem das Kühlgas mit einem definierten Druck enthalten ist. Aufgrund dieses Druckes strömt das Kühlgas G an der Eingangsöffnung 21 in den Eingangszweig 2 des fluidischen Schaltelementes 1 hinein. Alternativ kann das Kühlgas z.B. über einen an die Eingangsöffnung angeschlossenen Schlauch bereitgestellt werden.

Es ist vorgesehen, dass das Kühlgas abwechselnd jeweils nur in einen der beiden Ausgangszweige 31, 32 geleitet wird. Um dies zu realisieren, ist eine Steuerung vorgesehen, die zwei Steuerzuleitungen 51, 52 umfasst, die auf der Höhe der Verzweigung 4 in den Eingangszweig 2 münden und beispielsweise symmetrisch zueinander ausgebildet sind. Über die Steuerzuleitungen 51, 52 wird ein Steuermassenstrom S bereitgestellt, der ein Steuergas, bei dem es sich ebenfalls um Luft handeln kann, dem Bereich der Verzweigung 4 zuführt. Der Steuermassenstrom S ist mit einer definierten Frequenz und Amplitude beaufschlagt. Der Steuermassenstrom S ist dabei wesentlich geringer als der Hauptmassenstrom, der durch den Strom der Kühlluft G durch das fluidische Schaltelement gebildet ist.

Die periodische Schwankung des Steuermassenstroms S kann z.B. unter Ausnutzung von turbinen- oder verdichtergenerierten Schwankungen erzeugt werden, oder durch gesonderte Resonatoren oder Generatoren.

Durch die Beaufschlagung der Steuerzuleitungen 51, 52 mit einem Steuermassenstrom S definierter Frequenz erfolgt eine Steuerung, in welchen der Ausgangszweige 31, 32 das im Eingangszweig 2 strömende Kühlgas G (der Hauptmassenstrom) geleitet wird. Beispielsweise wird abhängig vom Phasenwinkel an den Steuerzuleitungen 51, 52 das Kühlgas in den einen oder den anderen der Ausgangszweige 31, 32 geleitet. Das Kühlgas wird zwischen den beiden Ausgangszweigen 31, 32 hin- und hergeschaltet. Dabei sind zahlreiche Ausführungsvarianten einer solchen Steuerung möglich.

Durch das Zuführen eines periodischen, verhältnismäßig kleinen Steuermassenstroms wird ein periodisches On/Off-Verhalten hoher Amplitude des Hauptmassenstromes in beiden Ausgangszweigen 31, 32 erzeugt. In beiden Ausgangszweigen 31, 32 bildet sich somit ein gepulster Prallstrahl P mit periodischem On/Off-Verhalten einer Frequenz f hoher Amplitude. An den Ausgangsöffnungen 8 der beiden Ausgangszweige 31, 32 liegt dementsprechend jeweils ein On/Off-Strahl vor. Dies wird erreicht, ohne dass der Hauptkühlmassenstrom G periodisch unterbrochen werden müsste, insbesondere ohne dass aktive Unterbrecheraktuatoren eingesetzt werden müssten oder eine schwankende Zuleitung hoher Amplitude des Hauptkühlmassenstroms G erforderlich wäre.

Die Amplitude des an den Ausgangsöffnungen 8 bereitgestellten On/Off-Strahls ist von der Amplitude des Steuermassenstroms, der an den Steuerzuleitungen 51, 52 anliegt, entkoppelt.

An den beiden Ausgangsöffnungen 8 der beiden Ausgangszweige 31, 32 tritt jeweils ein Prallstrahl P aus. Jeder Prallstrahl P besitzt während seiner "On"-Phasen eine mittlere Ausströmgeschwindigkeit u, mit der er aus der Ausgangsöffnung 8 austritt. Wenn d der Durchmesser der Ausgangsöffnung 8 des jeweiligen Ausgangszweigs 31, 32 ist, und f die Frequenz des On/Off-Strahls, so wird die Strouhalzahl Sr aus diesen Parametern wie folgt bestimmt: $Sr = f*d/u$.

Die Parameter Frequenz f, Durchmesser d der Ausgangsöffnung 8 und mittlere Ausströmgeschwindigkeit u sind dabei derart eingestellt, dass die Strouhalzahl Sr zwischen 0,26 und 2,0 liegt. Bevorzugt liegt die Strouhalzahl im Bereich zwischen 0,8 und 1,2. Bei solchen Werten der Strouhalzahl erzeugt der On/Off-gepulste Prallstrahl P nach Verlassen der Ausgangsöffnung 8 automatisch Ringwirbel 7, die in der Figur 1 schematisch dargestellt sind.

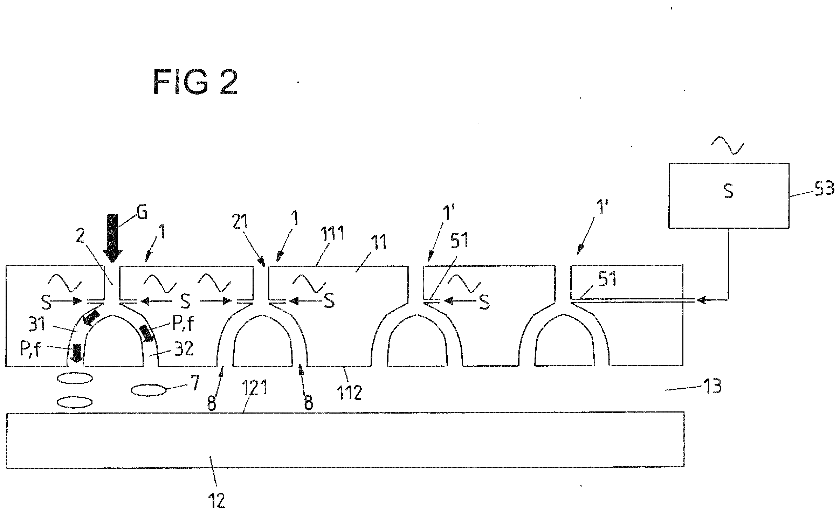

Die Figur 2 zeigt ein erstes Ausführungsbeispiel, bei dem fluidische Schaltelemente 1, wie sie in Bezug auf die Figur 1 beschrieben sind, zur Realisierung einer Prallkühlkonfiguration in einer Turbomaschine eingesetzt sind. Die Prallkühlkonfiguration ist beispielsweise in einem Hohlraum einer Turbinenkomponente realisiert. Die Schaltelemente 1 erzeugen wie in Bezug auf die Figur 1 beschrieben in den jeweiligen Ausgangszweigen 31, 32 einen gepulsten Prallstrahl P mit periodischem On/Off-Verhalten einer Frequenz f und hoher Amplitude, wobei der Prallstrahl P Ringwirbel 7 ausbildet.

Die Prallkühlkonfiguration der Figur 2 umfasst eine Trennwand 11, die zwei parallele Oberflächen 111, 112 aufweist. In der Trennwand 11 sind in linearer Anordnung eine Mehrzahl von fluidischen Schaltelementen 1 gemäß der Figur 1 angeordnet. Die fluidischen Schaltelemente 1 können dabei in Form eines eindimensionalen oder eines zweidimensionalen Arrays angeordnet sein.

Die Anordnung der fluidischen Schaltelemente 1 in der Trennwand 11 ist derart, dass die jeweilige Eingangsöffnung 21 des Eingangszweigs 2 in der Ebene der einen Oberfläche 111 und die jeweilige Ausgangsöffnung 8 der Ausgangszweige 31, 32 in der Ebene der anderen Oberfläche 112 liegen. Die Zufuhr von Kühlgas G erfolgt von der Seite der Oberfläche 111. Der Steuermassenstrom S wird durch eine Einheit 53 bereitgestellt, bei der es sich beispielsweise um einen Kompressor, eine Turbine, einen Resonator (z.B. Helmholtz-Resonator) oder einen Aktuator geringer Amplitude handelt.

Die Prallkühlkonfiguration weist des Weiteren beabstandet zu der Trennwand 11 eine zu kühlende Prallwand 12 auf. Die Prallwand 12 weist eine Oberfläche 121 auf, auf die die durch die Schaltelemente 1 erzeugten Ringwirbel 7 aufprallen. Durch die Ringwirbel 7 wird eine hohe Kühleffektivität bereitgestellt, da das periodische Auftreffen der Ringwirbel 7 zu einer periodischen Erneuerung von Fluid- und Temperaturgrenzschicht an der Oberfläche 121 führt.

Die Trennwand 11 und die zu kühlende Wand 12 sind in der Regel gekrümmt zueinander angeordnet, d. h. ihre entsprechenden Oberflächen 112, 121 sind jeweils gekrümmt. Dies ist in der schematischen Darstellung der Figur 2 nicht dargestellt. Es sind jedoch auch andere Ausgestaltungen möglich, beispielsweise eine winklige oder parallele Anordnung der Trennwand 11 und der zu kühlenden Wand 12.

Zwischen der Trennwand 11 und der zu kühlenden Wand 12 befindet sich ein Kühlluftkanal 13, über den die Kühlluft nach Auftreffen auf die zu kühlende Oberfläche 121 abtransportiert wird.

In der Figur 2 sind des Weiteren fluidische Steuerelemente 1' dargestellt, die sich von den fluidischen Schaltelementen 1 dadurch unterscheiden, dass eine einseitige Steuerung realisiert ist. Hierzu weist das fluidische Schaltelement 1' nicht zwei, sondern lediglich eine Steuerzuleitung 51 auf. Das Funktionsprinzip ist derart, dass das Kühlgas G ohne den Steuermassenstrom stets in einen der Ausgangszweige 31, 32 geleitet würde (monostabiler Zustand). Durch den Steuermassenstrom wird erreicht, dass das Kühlgas periodisch auf den anderen der Ausgangszweige umgeleitet wird.

In Ausführungsvarianten weist die Prallkühlkonfiguration nur Schaltelemente 1 mit beidseitiger Steuerung, nur Schaltelemente 1' mit einseitiger Steuerung oder sowohl Schaltelemente 1, 1' mit einseitiger als auch mit beidseitiger Steuerung auf.

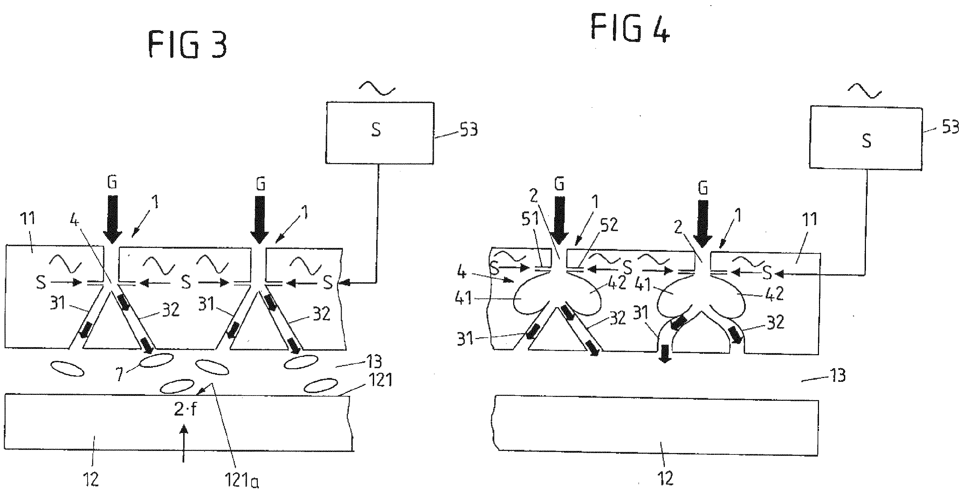

Die Figur 3 zeigt eine Abwandlung der Prallkühlkonfiguration der Figur 2, bei der die Ausgangszweige 31, 32 des fluidischen Schaltelementes 1, die sich an die Verzweigung 4 anschließen, unter einem Winkel ungleich 90° die Trennwand 11 verlassen. Die beiden Ausgangszweige 31, 32 sind dabei beispielsweise jeweils gradlinig ausgebildet. Dies führt dazu, dass Bereiche 121a der zu kühlenden Oberfläche 121 sowohl mit dem gepulsten Prallstrahl P des einen Ausgangszweigs 32 eines fluidischen Elementes 1 als auch mit dem gepulsten Prallstrahl P eines Ausgangszweigs 31 eines benachbarten fluidischen Schaltelementes 1 beaufschlagt werden. Dies führt zu einer Verdopplung der Aufprallfrequenz der Ringwirbel, da die Bereiche 121a mit phasenversetzt auftreffenden Ringwirbeln benachbarter fluidischer Schaltelemente 1 beaufschlagt werden.

Die Figur 4 zeigt eine Abwandlung der beschriebenen Prallkühlkonfiguration, bei der die fluidischen Schaltelemente 1 zur Realisierung hoher Frequenzen f der Pulsation des Prallstrahls P im Bereich von mehr als 10 kHz ausgebildet sind. Hierzu weist das Schaltelement 1 im Bereich der Verzweigung 4 in symmetrischer Weise zwei seitliche Ausbuchtungen 41, 42 unterhalb des Zugangs der Steuerzuleitungen 51, 52 auf. In den Ausbuchtungen 41, 42 wird ein Teil des über den Eingangszweig 2 zugeführten Kühlgases G kreisförmig zurückgeführt, wodurch ein Umschalten leichter und schneller realisiert werden kann. Derartige fluidische Schaltelemente sind aus der US 3,434,487 A bekannt. Solche seitlichen Rückkopplungs-Ausbuchten können unabhängig von der Form der Ausgangszweige 31, 32 und unabhängig davon, ob eine beidseitige oder eine einseitige Steuerung vorliegt, realisiert sein.

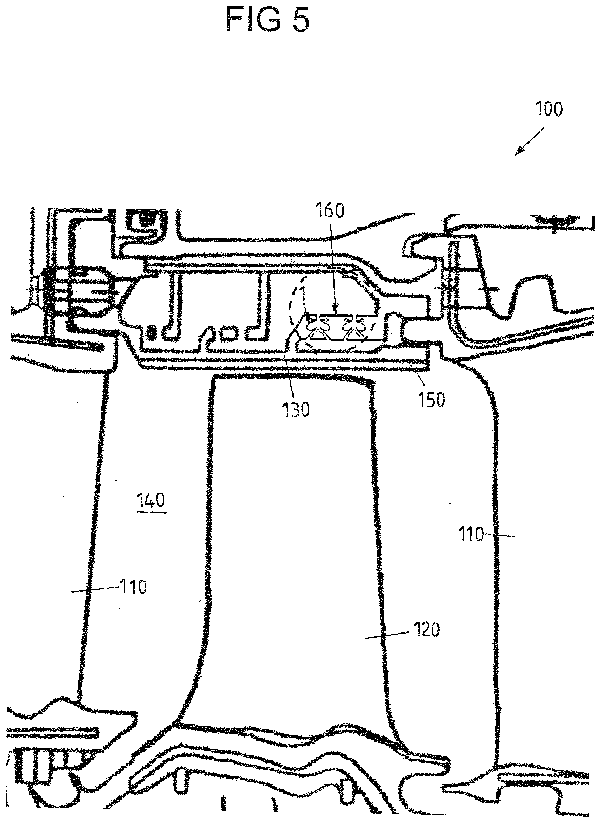

Die Figur 5 zeigt ein Anwendungsbeispiel, bei dem eine Prallkühlkonfiguration der beschriebenen Art zur Kühlung eines Gehäuses und/oder einer Auskleidung der Turbine 100 eines Strahltriebwerkes eingesetzt wird. Gemäß der Schnittdarstellung der Figur 1 weist die Turbine 100 Statoren 110 und Rotoren 120 auf. Es ist ein Umfangsgehäuse 130 vorgesehen, dass einen Strömungskanal 140 durch die Turbine 100 radial außen begrenzt. Zum Strömungskanal 140 hin ist auf dem Umfangsgehäuse 130 angrenzend an den Rotor 120 ein Auskleideelement in Form eines Einlegerings 150 (auch als "Liner" bezeichnet) angeordnet. Ein solcher Einlegering 150 dient dazu, den Ringspalt zwischen der Spitze des Rotors 120 und dem Gehäuse 130 zu minimieren. Alternativ kann das Gehäuse 130 jedoch auch ohne einen solchen Einlegering 150 ausgebildet sein.

Auf der dem Strömungskanal 140 abgewandten Seite des Gehäuses 130 ist eine Prallkühlkonfiguration 160 realisiert, die mehrere fluidische Schaltelemente 1 aufweist. Die Prallwand wird in diesem Ausführungsbeispiel durch das Gehäuse 130 bzw. dessen dem Strömungskanal 140 abgewandte Oberfläche gebildet. Der Steuermassenstrom wird beispielsweise unter Ausnutzung von turbinen- oder verdichtergenerierten Schwankungen bereitgestellt.

Die Prallkühlkonfiguration ist beispielsweise derart ausgelegt, dass der Durchmesser d der Ausgangsöffnungen der fluidischen Schaltelemente 1 bei 1,4 mm liegt. Die mittlere Ausströmgeschwindigkeit liegt bei 17 m/s. Die Frequenz f der Pulsation des Prallstrahls liegt bei 10 kHz. Die Steuerfrequenz zur Schaltung des fluidischen Schaltelementes liegt bauartabhängig zwischen 10 und 100 kHz. Mit diesen Werten ergibt sich eine Strouhalzahl von 0,82. Damit erzeugt der Prallstrahl periodisch Ringwirbel, die eine hohe Kühleffektivität bei der Kühlung des Gehäuses 130 und Einlegerings 150 realisieren.

Die Erfindung beschränkt sich in ihrer Ausgestaltung nicht auf die vorstehend dargestellten Ausführungsbeispiele, die lediglich beispielhaft zu verstehen sind.

Beispielsweise können die fluidischen Schaltelemente in anderer Weise ausgebildet sein, z.B. mehr als zwei Ausgangszweige aufweisen und/oder in anderer Weise geschaltet werden. Weiter ist beispielweise die Anordnung der fluidischen Schaltelemente in einem ein- oder zweidimensionalen Array lediglich beispielhaft zu verstehen. Die Prallwand kann Teil einer beliebigen inneren oder äußeren Wandung einer Komponente einer Turbomaschine sein.

## Patentansprüche

1.    Vorrichtung zur Erzeugung eines Ringwirbel (7) ausbildenden Prallstrahls (P),
   **gekennzeichnet durch**
   mindestens ein fluidisches Schaltelement (1, 1'), das aufweist:

   - einen Eingangszweig (2) mit einer Eingangsöffnung (21), über die dem fluidischen Schaltelement (1) Kühlgas (G) zuführbar ist,
   - mindestens zwei Ausgangszweige (31, 32), die stromab des Eingangszweigs (2) ausgebildet sind und die jeweils in einer Ausgangsöffnung (8) enden,
   - eine Verzeigung (4), an der sich der Eingangszweig (2) in die mindestens zwei Ausgangszweige (31, 32) aufteilt, und
   - äußere Steuermittel (31, 32, S) zur Steuerung des im Eingangszweig (2) strömenden Kühlgases (G) derart, dass das Kühlgas (G) abwechselnd in den einen oder den anderen der Ausgangszweige (31, 32) geleitet wird, wobei in jedem Ausgangszweig (31, 32) ein mit einer Frequenz (f) pulsierenden Prallstrahl (P) erzeugt wird, wobei die äußeren Steuermittel (31, 32, S) mindestens einen periodisch schwankenden Steuermassenstrom (S) umfassen und eine einseitige oder beidseitige Steuerung bereitstellen, wobei der eine Steuermassenstrom (S) oder die zwei Steuermassenströme (S) über eine oder zwei Steuerzuleitungen (51, 52) dem fluidischen Schaltelement (1) zugeführt werden,

   wobei das fluidische Schaltelement (1) dazu ausgebildet und vorgesehen ist, Kühlgas an den Ausgangsöffnungen (8) mit einer mittleren Ausströmgeschwindigkeit (u) und einer Frequenz (f) abzugeben, dass der aus den Ausgangsöffnungen (8) austretende Prallstrahl (P) Ringwirbel (7) ausbildet.

2. Vorrichtung nach Anspruch 1, **dadurch gekennzeichnet, dass** das Verhältnis zwischen der Frequenz (f) des pulsierenden Prallstrahls (P), der mittleren Ausströmgeschwindigkeit (u) des Kühlgases aus den Ausgangsöffnungen (8) und dem Durchmesser (d) der Ausgangsöffnungen (8) derart ist, dass die durch diese Werte nach der Formel Sr = f*d/u gebildete Strouhalzahl (Sr) im Bereich zwischen 0,2 und 2,0, insbesondere im Bereich zwischen 0,8 und 1,2 liegt.

3. Vorrichtung nach einem der vorangehenden Ansprüche, **dadurch gekennzeichnet, dass** das fluidische Schaltelement (1, 1') in einer Trennwand (11) ausgebildet ist, die beabstandet zu einer zu kühlenden Prallwand (12) angeordnet ist, wobei die vom Prallstrahl (P) ausgebildeten Ringwirbel (7) auf die Prallwand (12) prallen.

4. Vorrichtung nach einem der vorangehenden Ansprüche, **dadurch gekennzeichnet, dass** die Ausgangszweige (31, 32) des fluidischen Schaltelements (1) gebogen ausgebildet sind.

5. Vorrichtung nach einem der vorangehenden Ansprüche, **dadurch gekennzeichnet, dass** die Ausgangszweige (31, 32) des fluidischen Schaltelements (1) gerade ausgebildet sind.

6. Vorrichtung nach einem der vorangehenden Ansprüche, **dadurch gekennzeichnet, dass** die Verzweigung (4) zwei Rückkopplungs-Ausbuchtungen (41, 42) ausbildet, in denen ein Teil des Kühlgases (G), statt in einen der Ausgangszweige (31, 32) zu strömen, in Richtung des Eingangszweigs (2) zurückgeführt wird.

7. Vorrichtung nach einem der vorangehenden Ansprüche, **dadurch gekennzeichnet, dass** die Vorrichtung eine Mehrzahl von fluidischen Schaltelementen (1, 1') aufweist, die in Form eines ein- oder zweidimensionalen Arrays angeordnet sind.

8. Vorrichtung nach einem der vorangehenden Ansprüche, **dadurch gekennzeichnet, dass** zwei fluidische Schaltelemente (1) derart nebeneinander angeordnet und zwei Ausgangszweige (31, 32) dieser nebeneinander angeordneten fluidischen Schaltelemente (1) derart zueinander ausgerichtet sind, dass in einem definierten Abstand zu den fluidischen Schaltelementen (1) Ringwirbel (7) mit einer doppelten Frequenz (2*f) vorliegen.

9. Turbomaschine mit einer Vorrichtung gemäß Anspruch 1, **dadurch gekennzeichnet, dass** das fluidische Schaltelement (1) derart in der Turbomaschine (100) angeordnet ist, dass die Ringwirbel, die der aus den Ausgangsöffnungen (8) des fluidischen Schaltelements (1) austretende Prallstrahl (P) ausbildet, auf eine zu kühlende Wand (130, 150) oder Oberfläche der Turbomaschine (100) treffen.

10. Turbomaschine nach Anspruch 9, **dadurch gekennzeichnet, dass** die Turbomaschine (100) eine Turbine und die zu kühlende Wand (130, 150) oder Oberfläche die eines Gehäuses, einer Gehäuseverkleidung oder einer Turbinenschaufel der Turbine ist.

11. Turbomaschine nach Anspruch 10, **dadurch gekennzeichnet, dass** die zu kühlende Oberfläche die rückseitige Oberfläche eines Einlegerings (150) ist, der im Bereich des Rotors (120) einer Turbine (100) am Umfang des Turbinengehäuses (130) angeordnet ist.

12. Verfahren zur Erzeugung eines Ringwirbel ausbildenden Prallstrahls, **dadurch gekennzeichnet, dass** Kühlgas mittels äußeren Steuermitteln (31, 32, S) in einem fluidischen Schaltelement (1, 1') abwechselnd mindestens zwei Ausgangszweigen (31, 32) des fluidischen Schaltelements (1, 1') zugeführt wird, wobei in jedem Ausgangszweig (31, 32) ein mit einer Frequenz (f) pulsierenden Prallstrahl (P) erzeugt wird, der nach Verlassen des fluidischen Schaltelements (1, 1') Ringwirbel (7) ausbildet, wobei die äußeren Steuermittel (31, 32, S) mindestens einen periodisch schwankenden Steuermassenstrom (S) umfassen und eine einseitige oder beidseitige Steuerung bereitstellen, wobei der eine Steuermassenstrom (S) oder die zwei Steuermassenströme (S) über eine oder zwei Steuerzuleitungen (51, 52) dem fluidischen Schaltelement (1) zugeführt werden.

## Claims

1. Apparatus for producing an impingement jet (P), which forms ring vortices (7), in a turbomachine, **characterized by** at least one fluidic switching element (1, 1') which has:

    - an input branch (2) with an input opening (21) via which cooling gas (G) can be supplied to the fluidic switching element (1),
    - at least two output branches (31, 32) which are formed downstream of the input branch (2) and which each end in an output opening (8),
    - a branching (4) at which the input branch (2) is split into the at least two output branches (31, 32), and
    - outer control means (31, 32, S) for controlling the cooling gas (G) flowing in the input branch (2) in such a way that the cooling gas (G) is alternately conducted into one or the other of the output branches (31, 32), wherein an impingement jet (P) which pulsates at a frequency (f) is produced in each output branch (31, 32), wherein the outer control means (31, 32, S) comprise at least one periodically fluctuating control mass flow (S) and provide control on one side or on both sides, wherein the one control mass flow (S) or the two control mass flows (S) are supplied to the fluidic switching element (1) via one or two control feed lines (51, 52),

wherein the fluidic switching element (1) is designed and provided for outputting cooling gas at the output openings (8) at an average outflow speed (u) and a frequency (f) that the impingement jet (P) which emerges from the output openings (8) forms ring vortices (7).

2. Apparatus according to Claim 1, **characterized in that** the relationship between the frequency (f) of the pulsating impingement jet (P), the average outflow speed (u) of the cooling gas out of the output openings (8) and the diameter (d) of the output openings (8) is such that the Strouhal number (Sr) which is formed by these values in accordance with the formula Sr = f*d/u lies in the range of between 0.2 and 2.0, in particular in the range of between 0.8 and 1.2.

3. Apparatus according to either of the preceding claims, **characterized in that** the fluidic switching element (1, 1') is formed in a separating wall (11) which is arranged at a distance from an impingement wall (12) to be cooled, wherein the ring vortexes (7) which are formed by the impingement jet (P) hit the impingement wall (12).

4. Apparatus according to one of the preceding claims, **characterized in that** the output branches (31, 32) of the fluidic switching element (1) are of bent design.

5. Apparatus according to one of the preceding claims, **characterized in that** the output branches (31, 32) of the fluidic switching element (1) are of straight design.

6. Apparatus according to one of the preceding claims, **characterized in that** the branching (4) forms two feedback recesses (41, 42) into which a portion of the cooling gas (G), instead of flowing into one of the output branches (31, 32), is returned in the direction of the input branch (2).

7. Apparatus according to one of the preceding claims, **characterized in that** the apparatus has a plurality of fluidic switching elements (1, 1') which are arranged in the form of a one- or two-dimensional array.

8. Apparatus according to one of the preceding claims, **characterized in that** two fluidic switching elements (1) are arranged next to one another and two output branches (31, 32) of these fluidic switching elements (1) which are arranged next to one another are oriented in relation to one another in such a way that ring vortexes (7) with twice the frequency (2*f) are present at a defined distance from the fluidic switching elements (1).

9. Turbomachine comprising an apparatus according to Claim 1, **characterized in that** the fluidic switching element (1) is arranged in the turbomachine (100) in such a way that the ring vortexes, which are formed by the impingement jet (P) which emerges from the output openings (8) of the fluidic switching element (1), strike a wall (130, 150) or surface of the turbomachine (100) to be cooled.

10. Turbomachine according to Claim 9, **characterized in that** the turbomachine (100) is a turbine and the wall (130, 150) or surface to be cooled is that of a housing, a housing cladding or a turbine blade of the turbine.

11. Turbomachine according to Claim 10, **characterized in that** the surface to be cooled is the rear-side surface of an insert ring (150) which is arranged in the region of the rotor (120) of a turbine (100) at the periphery of the turbine housing (130).

12. Method for producing an impingement jet, which forms ring vortexes, in a turbomachine, **characterized in that** cooling gas is supplied alternately to at least two output branches (31, 32) of the fluidic switching element (1, 1') by means of outer control means (31, 32, S) in a fluidic switching element (1, 1'), wherein an impingement jet (P) which pulsates at a frequency (f) is produced in each output branch (31, 32) and, after leaving the fluidic switching element (1, 1'), forms ring vortexes (7), wherein the outer control means (31, 32, S) comprise at least one periodically fluctuating control mass flow (S) and provide control on one side or on both sides, wherein the one control mass flow (S) or the two control mass flows (S) are supplied to the fluidic switching element (1) via one or two control feed lines (51, 52).

**Revendications**

1. Dispositif destiné à générer un jet d'impact (P) formant un tourbillon annulaire (7) dans une turbomachine, **caractérisé par** au moins un élément de commutation fluidique (1, 1') qui possède :

- une branche d'entrée (2) pourvue d'une ouverture d'entrée (21) par le biais de laquelle un gaz de refroidissement (G) peut être acheminé à l'élément de commutation fluidique (1),
- au moins deux branches de sortie (31, 32) qui sont formées en aval de la branche d'entrée (2) et qui se terminent respectivement dans une ouverture de sortie (8),
- une bifurcation (4) au niveau de laquelle la branche d'entrée (2) se sépare en les au moins deux branches de sortie (31, 32) et
- des moyens de commande externes (31, 32, S) destinés à commander le gaz de refroidissement (G) qui s'écoule dans la branche d'entrée (2) de telle sorte que le gaz de refroidissement (G) est conduit en alternance dans l'une ou l'autre des branches de sortie (31, 32), un jet d'impact (P) pulsé à une fréquence (f) étant généré dans chaque branche de sortie (31, 32), les moyens de commande externes (31, 32, S) comportant au moins un débit massique de commande (S) à fluctuation périodique et fournissant une commande unilatérale ou bilatérale, ledit débit massique de commande (S) ou les deux débits massiques de commande (S) étant acheminés à l'élément de commutation fluidique (1) par le biais d'une ou de deux lignes d'arrivée de commande (51, 52),

l'élément de commutation fluidique (1) étant configuré et conçu pour délivrer le gaz de refroidissement au niveau des ouvertures de sortie (8) avec une vitesse d'écoulement de sortie (u) moyenne et une fréquence (f) que le jet d'impact (P) qui sort des ouvertures de sortie (8) forme un tourbillon annulaire (7).

2. Dispositif selon la revendication 1, **caractérisé en ce que** le rapport entre la fréquence (f) du jet d'impact (P) pulsé, la vitesse d'écoulement de sortie (u) moyenne du gaz de refroidissement hors des ouvertures de sortie (8) et le diamètre (d) des ouvertures de sortie (8) est tel que le nombre de Strouhal (Sr) formé par ces valeurs selon la formule Sr = f*d/ est compris dans la plage entre 0,23 et 2, 0, notamment dans la plage entre 0,8 et 1,2.

3. Dispositif selon l'une des revendications précédentes, **caractérisé en ce que** l'élément de commutation fluidique (1, 1') est formé dans une paroi de séparation (11) qui est disposée espacée d'une paroi d'impact (12) à refroidir, les tourbillons annulaires (7) formés par le jet d'impact (P) frappant la paroi d'impact (12) .

4. Dispositif selon l'une des revendications précédentes, **caractérisé en ce que** les branches de sortie (31, 32) de l'élément de commutation fluidique (1) sont de configuration courbe.

5. Dispositif selon l'une des revendications précédentes, **caractérisé en ce que** les branches de sortie (31, 32) de l'élément de commutation fluidique (1) sont de configuration droite.

6. Dispositif selon l'une des revendications précédentes, **caractérisé en ce que** la bifurcation (4) forme deux courbures de rétroaction (41, 42) dans lesquelles une partie du gaz de refroidissement (G), au lieu de s'écouler dans l'une des branches de sortie (31, 32), est réacheminée en direction de la branche d'entrée (2) .

7. Dispositif selon l'une des revendications précédentes, **caractérisé en ce que** le dispositif comporte une pluralité d'éléments de commutation fluidique (1, 1') qui sont disposés sous la forme d'un réseau uni- ou bidimensionnel.

8. Dispositif selon l'une des revendications précédentes, **caractérisé en ce que** deux éléments de commutation fluidique (1) sont disposés l'un à côté de l'autre et deux branches de sortie (31, 32) de ces éléments de commutation fluidique (1) disposés l'un à côté de l'autre sont orientées l'une par rapport à l'autre de telle sorte que des tourbillons annulaires (7) ayant une fréquence double (2*f) sont présents à un écart défini par rapport aux éléments de commutation fluidique (1) .

9. Turbomachine comprenant un dispositif selon la revendication 1, **caractérisée en ce que** l'élément de commutation fluidique (1) est disposé dans la turbomachine (100) de telle sorte que les tourbillons annulaires que forme le jet d'impact (P) sortant des ouvertures de sortie (8) de l'élément de commutation fluidique (1) viennent frapper sur une paroi (130, 150) ou une surface à refroidir de la turbomachine (100).

10. Turbomachine selon la revendication 9, **caractérisée en ce que** la turbomachine (100) est une turbine et la paroi (130, 150) ou la surface à refroidir est celle d'un carter, d'un habillage de carter ou d'une pale de turbine de la turbine.

11. Turbomachine selon la revendication 10, **caractérisée en ce que** la surface à refroidir est la surface dorsale d'une bague d'insertion (150) qui est disposée dans la zone du rotor (120) d'une turbine (100) sur le pourtour du carter de turbine (130).

12. Procédé pour générer un jet d'impact formant un tourbillon annulaire dans une turbomachine, **carac-**

**térisé en ce que** du gaz de refroidissement (G) est acheminé, par l'intermédiaire de moyens de commande externes (31, 32, S) dans un élément de commutation fluidique (1, 1'), en alternance entre deux branches de sortie (31, 32) de l'élément de commutation fluidique (1, 1'), un jet d'impact (P) pulsé à une fréquence (f) étant généré dans chaque branche de sortie (31, 32), lequel forme des tourbillons annulaires (7) après avoir quitté l'élément de commutation fluidique (1, 1'), les moyens de commande externes (31, 32, S) comportant au moins un débit massique de commande (S) à fluctuation périodique et fournissant une commande unilatérale ou bilatérale, ledit débit massique de commande (S) ou les deux débits massiques de commande (S) étant acheminés à l'élément de commutation fluidique (1) par le biais d'une ou de deux lignes d'arrivée de commande (51, 52).

# FIG 1

FIG 2

FIG 3

FIG 4

EP 2 540 992 B1

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1959096 A
- DE 102007008319 A1

- US 5190099 A
- US 3434487 A

**In der Beschreibung aufgeführte Nicht-Patentliteratur**

- **HERWIG.** Wärmeübergang bei instationären Prallstrahlen. *Chemie Ingenieur Technik,* 2004, vol. 76 (2), 84-88

- **KIRSHNER.** Fluid Amplifiers. McGraw-Hill, 1966, 193-203